# EUROPÄISCHE PATENTSCHRIFT

(11) **EP 2 756 761 B1**
(45) Veröffentlichungstag und Bekanntmachung des Hinweises auf die Patenterteilung: **18.05.2016**
(21) Anmeldenummer: 14151427.3
(22) Anmeldetag: 16.01.2014
(51) Int. Cl.: A23G 9/08, A23G 9/12, A23G 9/22

(54) **VORRICHTUNG ZUR HERSTELLUNG VON SPEISEEIS**
DEVICE FOR MANUFACTURING ICE CREAM
DISPOSITIF DE FABRICATION DE GLACE ALIMENTAIRE

(30) Priorität: 17.01.2013 DE 102013100487
(43) Veröffentlichungstag der Anmeldung: 23.07.2014
(73) Patentinhaber: Thate, Helmut, 67433 Neustadt (DE)
(72) Erfinder: Thate, Helmut, 67433 Neustadt (DE)
(74) Vertreter: Dr. Langfinger & Partner

(56) Entgegenhaltungen:
- CH-A- 475 530
- CH-A5- 561 023
- DE-A1- 3 307 616
- US-A- 1 883 109
- US-A- 2 082 752
- Anonymous: "Gebrauchanleitung Thermomix TM 31", Vorwerk.com , 12. August 2011 (2011-08-12), Seiten FP, 3-42, XP002722056, Gefunden im Internet: URL:http://web.archive.org/web/*/http://th ermomix.vorwerk.com/fileadmin/data/de/pdf/ 02_main-navigation/04_Service/02_Gebrauchs anleitung/instruction_manual_tm31_de.pdf [gefunden am 2014-03-19]

## Beschreibung

Die vorliegende Erfindung betrifft eine Vorrichtung zur diskontinuierlichen Herstellung von Speiseeis mit einer Einrichtung zum Kühlen, einem thermostatisierbaren Mischbehälter und einer in diesem thermostatisierbaren Mischbehälter angeordneten Mischeinrichtung.

Aus der DE A 37 26 836 ist eine Vorrichtung zur kontinuierlichen Herstellung von Speiseeis bekannt, die einen Gefrierbehälter aufweist, in dem auf einer Antriebswelle eine schraubenförmig Förderschnecke und davor ein Schlag-und Rührwerk angeordnet sind.

In der DE 844 748 wird ein Speiseeisbereiter mit im Innern des Gefrierbehälters befindlichem, das Kühlmittel aufnehmendem Kühlkörper beschrieben, wobei der Kühlkörper von einem Kälte- oder Kühlmittel durchflossen ist und im Gefrierbehälter feststehend angeordnet ist. Um das Gefriergut von der Oberfläche des Kühlkörpers entfernen zu können, ist ein Abstreifspatel vorgesehen. Diese Vorrichtung weist den Nachteil auf, dass die Befüllung mit der Rohmasse und die Entleerung des Speiseeises aufgrund des feststehenden Kühlkörpers im Gefrierbehälter erschwert ist. Zudem ist die Reinigung der Vorrichtung aufwändig, was insbesondere bei einem häufigen Produktwechsel (Herstellung von Speiseeis mit unterschiedlichen Rezepturen und Geschmacksrichtungen) von Nachteil ist.

Aus der DE 25 35 820 ist ein Speiseeisbereiter bekannt, der eine Gefriertrommel aufweist, in der konzentrisch zur vertikalen Mittelachse ein Wellenrohr angeordnet ist, durch das eine von unten angetriebene Rührwerkswelle hindurchgeführt ist.

Aus der DE 3307016 ist eine Maschine zur Herstellung von Speiseeis im diskontinuierlichen Arbeitsgang und vollständigem Ausstoß jeder Charge bekannt, die aus einer gekühlten, horizontal angeordneten und zylindrischen Arbeitskammer mit Einfüll- und Ablassvorrichtungen sowie parallel zur Kammerinnenwandung umlaufende, sich über die gesamte Kammerlänge erstreckenden Bestreichelemente bekannt, bei der die Bestreichelemente dergestalt ausgelegt sind, dass diese in Längsrichtung der Arbeitskammer verschiebbar sind. Dadurch soll die Durchmischung der Ausgangsstoffe verbessert werden.

Aus der CH 561023 ist eine Vorrichtung zur Herstellung von Speiseeis mit einem feststehend angeordneten Gefrierbehälter bekannt, bei der in dem Gefrierbehälter ein an einem Tragarm befestigtes Misch- und Förderglied vorgesehen ist und der Gefrierbehälter eine Öffnung zum Einfüllen und eine Öffnung zum Entleeren aufweist.

US 2 082 752 A offenbart eine Eismaschine mit einer Basisplatte, auf der zylindrische Wände angeordnet sind, zwischen denen sich zur Isolation eine Luftschicht befindet. Eine vertikale Achse ist dabei mittels einer Kraft rotierbar, wobei an der vertikalen Achse Mischarme angeordnet sind, die vertikale Finger zum Mischen aufweisen. Die vertikale Achse wird dabei von einem im Fuß angeordneten Antrieb angetrieben. Über eine Öffnung kann das Kühlmedium zugeführt werden. Der Fuß ist dabei über ein Element fest starr mit der Basisplatte verbunden. Die vertikale Achse und das Element sind starr, so dass keine Verschwenkung der Mischeinrichtung gegenüber der Basisplatte ermöglicht ist.

US 1 883 109 A offenbart eine Eismaschine mit einem Behälter, der mittels einer Kühlmittelzuführung gekühlt werden kann. Eine Pumpe wird dabei ebenso wie ein Riemenrad von einem Motor angetrieben.

CH 475 530 A offenbart ebenfalls eine Vorrichtung zur Herstellung von Speiseeis, wobei eine Kühlvorrichtung mittels eines flexiblen Rohrs ein Kühlmedium für einen Mischbehälter mit einer darin angeordneten Mischeinrichtung bereitstellt.

Ebenfalls bekannt sind Vorrichtungen zur diskontinuierlichen Herstellung von Speiseeis mit einem in einer Einheit aufgebauten Kombination aus einem motorisch angetriebenen Rührwerk und einem Kälteaggregat. Nachteilig an diesen Vorrichtungen ist der relativ große Platzbedarf und die ergonomisch ungünstige Position zum Befüllen, Entleeren und Reinigen, da die Vorrichtung hierzu nur von oben zugänglich ist.

Aufgabe der vorliegenden Erfindung war es daher, eine Vorrichtung zur diskontinuierlichen Herstellung von Speiseeis zur Verfügung zu stellen, welche die vorstehend beschriebenen Nachteile nicht aufweist und in der auf einfache Weise auch häufige Rezepturwechsel möglich sind.

Erfindungsgemäß wird diese Aufgabe durch eine Vorrichtung zur diskontinuierlichen Herstellung von Speiseeis gemäß Patentanspruch 1 gelöst.

Bevorzugte Ausführungsformen der Erfindung sind den Unteransprüchen und der nachfolgenden detaillierten Beschreibung zu entnehmen.

Die erfindungsgemäße Vorrichtung weist eine Einrichtung zum Kühlen, einen thermostatisierbaren Mischbehälter und eine in diesem thermostatisierbaren Mischbehälter angeordnete Mischeinrichtung auf.

Erfindungsgemäß ist die Einrichtung zum Kühlen, bei der es sich z.B. um ein an sich bekanntes Kälteaggregat handeln kann, räumlich von der Mischeinrichtung getrennt und mit dieser über ein Handhabungsgestell verbunden, wobei das Handhabungsgestell eines oder mehrere Gelenke aufweist, um die Mischeinrichtung räumlich und örtlich in- oder außerhalb des Mischbehälters verändern zu können. Dies birgt den Vorteil, dass damit die Mischeinrichtung zum Befüllen, Entleeren oder Reinigen des Mischbehälters leicht in eine Position gebracht werden kann, in der die Mischeinrichtung den entsprechenden Vorgang nicht behindert.

So kann mit einer entsprechenden Ausgestaltung des Handhabungsgestells die Mischeinrichtung verfahren werden, um ein leichteres Entnehmen des hergestellten Speiseeises zu ermöglichen, beispielsweise durch Verschwenken oder axiales Verschieben in einen Bereich außerhalb des Mischbehälters, womit der Mischbehälter ohne störenden Einfluss der Mischeinrichtung befüllt, entleert oder gereinigt werden kann.

Durch diese Möglichkeit ist es entbehrlich, im Mischbehälter eine Entleerungsöffnung vorzusehen, weil die Entleerung und Befüllung über die gleiche Öffnung erfolgen kann, da der Mischbehälter in der Position leicht veränderbar ist.

Vorzugsweise ist das Handhabungsgestell kraftkompensiert ausgestaltet um eine einfache Ortsveränderung, z.B.. ein einfaches Verfahren und Verschwenken der Mischeinrichtung zu ermöglichen.

Unter Kraftkompensation soll im Rahmen der vorliegenden Erfindung ein Prinzip verstanden werden, bei dem die zur Manipulation bzw. Ortsveränderung eines Geräts oder Körpers erforderliche Kraft, die vom Bediener aufzubringen ist, durch entsprechende apparative Ausgestaltungen durch entgegengesetzt wirkende Kräfte ganz oder teilweise kompensiert wird, so dass das Bedienpersonal nur noch einen Anteil der eigentlich erforderlichen Kraft aufwenden muss, um das Gerät oder den Körper zu bewegen. Vorzugsweise wird die Kraftkompensation so gestaltet, dass mindestens 50, vorzugsweise mindestens 70 % der Kraft kompensiert werden, so dass maximal 50, vorzugsweise maximal 30%, der eigentlich erforderlichen Kraft noch vom Bedienpersonal aufzubringen sind.

Durch eine mehr oder weniger vollständige Kraftkompensation der Gelenkkräfte wird die Handhabung der Mischeinrichtung erheblich erleichtert, da die zur Ortsveränderung benötigte Kraft deutlich verringert ist. Der Operator muss nur noch eine geringere Kraft aufwenden, da ein Teil der zur Ortsveränderung erforderlichen Kraft durch die Einrichtung zur Kraftkompensation erbracht wird und daher nur noch ein Bruchteil der Gesamtenergie vom Operator zu erbringen ist
Entsprechende Ausgestaltungen mit Hilfe von Gelenken oder dergleichen sind dem Fachmann bekannt und in der Literatur beschrieben, so dass sich hier weitere Einzelheiten erübrigen. Der Fachmann wird, ausgehend von der konkreten Gestaltung von Mischbehälter und Einrichtung zum Kühlen, die konkrete Ausgestaltung des Handhabungsgestells mit der geeigneten Form der Kraftkompensation wählen.
Beispielhaft seinen hier als Gelenkform sogenannte Biegegelenke genannt, die die konstruktive Möglichkeit bieten, reibungsfreie Drehpunkte zu realisieren. Einfachste Ausführung eines solchen Biegegelenks ist eine Blattfeder. Grundsätzlich lassen sich solche Biegegelenke dadurch erhalten, dass man Dünnstellen aus einem Festkörper herausfräst, wobei die dünnste Stelle der Gelenkdrehpunkt ist.

Systeme zur Kraftkompensation können mechanisch (mit Hilfe von Gewichtsstücken oder Gegengewichten), elektrisch oder elektromagnetisch ausgestaltet sein, um hier nur drei Beispiele zu nennen. Eine Feder ist eine andere einfache mechanische Möglichkeit einer Kraftkompensation.

Gemäß einer weiteren bevorzugten Ausführungsform der Vorrichtung gemäß der vorliegenden Erfindung ist das Handhabungsgestell mit einer Einrichtung zum Abwiegen verbunden oder weist eine solche Einrichtung auf, d.h. eine Vorrichtung zum Abwiegen ist in das Handhabungsgestell integriert. In diesen Fällen kann das Prinzip der elektromagnetischen Kraftkompensation, auf dem viele moderne Waagen beruhen, vorteilhaft eingesetzt werden. Dies ermöglicht das Abwiegen der Rezepturkomponenten direkt bei der Befüllung der Vorrichtung, d.h. ein vorheriges separates Abwiegen der einzelnen Bestandteile der Mischung ist nicht mehr erforderlich. Konkret kann dies z.B. dadurch erreicht werden, dass das Handhabungsgestell mit einer z.B. kraftkompensierten Waage verbunden ist oder eine solche Waage in das Handhabungsgestell integriert ist. Die Bestandteile der Eismischung werden dann über diese Einrichtung zum Abwiegen in den Mischbehälter eingebracht.

Alternativ ist es auch möglich, die Bestandteile der Mischung über geeignete Dosier- oder Fördereinrichtungen in den Mischbehälter zu überführen. Diese können ebenfalls mit einer Einrichtung zum Abwiegen verbunden sein. Insbesondere in den Fällen, in denen z.B. Obst als Bestandteil der Rohmasse enthalten ist, welches in der Regel nicht über eine Dosiereinrichtung kontrolliert und abgewogen zugeführt werden kann, ist es vorteilhaft, das Handhabungsgestell mit einer entsprechenden Einrichtung zu verbinden oder eine solche Einrichtung in das Handhabungsgestell zu integrieren.

Bei der Einrichtung zum Mischen handelt es sich vorzugsweise um einen Rührer oder ein Rührwerk, mit welchem zum einen die Bestandteile der Mischung durchmischt werden können und zum anderen im Verlauf der Herstellung an der gekühlten Behälterwand anhaftendes Produkt entfernt und wieder in den Mischbereich zurück transferiert werden kann. Der Grad dieses Abschabens des Produkts von der Behälterwand kann durch den Abstand von Mischeinrichtung und Behälterwand und auch durch die Formgestaltung des Rührers oder Rührwerks gesteuert werden. Wenn die Mischeinrichtung, d.h. der Rührer oder das Rührwerk beispielsweise einen konischen oder vergleichbaren Querschnitt aufweist, kann durch einfaches axiales Verschieben der Mischeinrichtung die Beabstandung derselben von der Behälterwand eingestellt und verändert und damit der Grad und die Effizienz der Abschabung des Produkts einfach gesteuert werden.

Zum Befüllen kann die Mischeinrichtung über das Handhabungsgestell in eine Position gebracht werden, in der die Mischeinrichtung den Befüllvorgang nicht behindert oder es kann die Mischeinrichtung bereits während des Befüllvorgangs betrieben werden, um eine gute und gleichmäßige Durchmischung bereits beim Befüllen zu erreichen. In der Regel wird die letztgenannte Betriebsart bevorzugt. Nach Beendigung des Produktionsvorgangs, d.h. wenn das Produkt die gewünschte Konsistenz und Zusammensetzung erreicht hat, kann zur Erleichterung einer vollständigen Produktentnahme die Mischeinrichtung über das Handhabungsgestell aus dem Mischbehälter herausgefahren werden und so der Mischbehälter einfach entleert werden. So kann das Produkt quantitativ ohne Verluste und einfach entnommen werden. auch die nachfolgend im Regelfall erforderliche Reinigung, bevor eine neue Produktcharge eingefüllt wird, wird dadurch vereinfacht und eine hygienisch einwandfreie Reinigung sichergestellt.

Gemäß einer weiteren bevorzugten Ausführungsform ist der Mischbehälter ebenfalls mit dem Handhabungsgestell verbunden und kann über entsprechende Gelenke oder geeignete Einrichtungen um seine horizontale und/oder vertikale Achse gedreht oder verschwenkt werden. Dies ermöglicht es, den Mischbehälter zum Befüllen, Entleeren oder Reinigen in eine für den Operator ergonomisch optimale Position zu bringen.

Gemäß einer bevorzugten Ausführungsform ist der Mischbehälter am Handhabungsgestell drehbar befestigt und kann über einen Betätigungshebel in die gewünschte Position gebracht werden.

Vorzugsweise weist der Mischbehälter einen Deckel auf, mit dem der Mischbehälter nach Befüllung dicht verschlossen werden kann, um beim Herstellungsvorgang die Temperatur im Mischbehälter besser kontrollieren zu können und den Austritt von Produkt zu verhindern. Zudem wird so vermieden, dass Verunreinigungen aus der Umgebung die Produktqualität beeinträchtigen. Zum Befüllen, Entleeren und Reinigen wird der Deckel geöffnet, während des eigentlichen Produktionsvorgangs bleibt er geschlossen.

Der Mischbehälter der erfindungsgemäßen Vorrichtung ist thermostatisierbar, d.h. dessen Temperatur kann mittels der Einrichtung zum Kühlen auf eine gewünschte Temperatur gebracht werden. Gemäß einer bevorzugten Ausführungsform weist der Mischbehälter eine Doppelwandung auf. In dem zwischen den Wandungen entstehenden Hohlraum zirkuliert ein Kühlmedium, welches von der Einrichtung zum Kühlen auf die gewünschte Temperatur gebracht wird. Vorzugsweise wird ein kontinuierlicher Durchfluss des Kühlmediums aufrechterhalten, um die Temperatur der Behälterwandung möglichst konstant auf dem gewünschten Wert halten zu können. Dem vom Mischbehälter in die Kühleinrichtung zurückfließenden Kühlmedium wird dort die aufgenommene Wärme entzogen und das Kühlmedium wieder in den Mischbehälter zurückgeführt.

Entsprechende Temperiereinrichtungen sind dem Fachmann an sich bekannt und in der Literatur beschrieben, so dass sich hier detaillierte Ausführungen erübrigen.

Die Leitungssysteme für das Kühlmedium können mit dem Handhabungsgestell verbunden, in dieses integriert oder separat von der Kühleinrichtung zum Mischbehälter geführt werden. Prinzipiell ist es auch möglich, den Mischbehälter vor dem Produktionsvorgang in einer Kältekammer auf eine ausreichend niedrige Temperatur zu bringen, die ausreicht um während des Produktionsvorgangs ohne kontinuierliche Kühlung zu arbeiten. Allerdings verändert sich bei dieser Betriebsweise die Temperatur des Mischbehälters während des Produktionsvorgangs in einer nicht leicht reproduzierbaren Art und Weise, was die Konstanz der Produktqualität nachteilig beeinflussen kann. Daher ist eine Vorrichtung bevorzugt, die kontinuierlich gekühlt und somit auf einer vorgegebenen Temperatur gehalten werden kann.

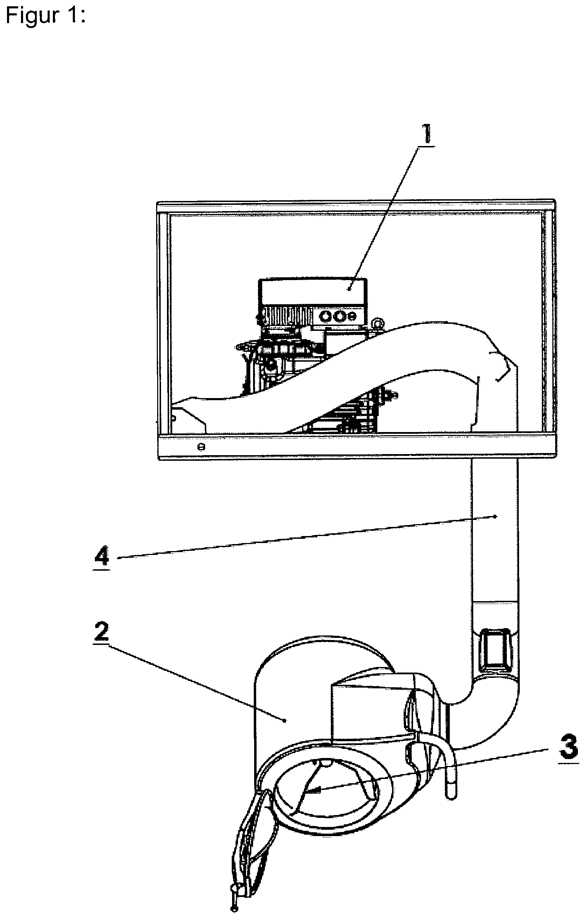

Fig. 1 zeigt eine erfindungsgemäße Vorrichtung mit einem Kühlaggregat (1), welches über ein Handhabungsgestell (4) mit einem Rührer (3) und einem Mischbehälter (2) verbunden ist.

Mit der erfindungsgemäßen Vorrichtung kann auf einfache Weise diskontinuierlich mit einem häufigen Produktwechsel Speiseeis mit unterschiedlichen Rezepturen hergestellt werden. Durch die einfache Verschieb- und Verschwenkbarkeit der Mischeinrichtung sind Befüllung, Entleerung und Reinigung im Vergleich zu dem aus dem Stand der Technik bekannten Vorrichtungen deutlich erleichtert.

## Patentansprüche

1. Vorrichtung zur diskontinuierlichen Herstellung von Speiseeis mit einer Einrichtung zum Kühlen (1), einem thermostatisierbaren Mischbehälter (2) und einer in diesem thermostatisierbaren Mischbehälter angeordneten Mischeinrichtung (3), **dadurch gekennzeichnet, dass** die Einrichtung zum Kühlen (1) räumlich von der Mischeinrichtung (3) getrennt und über ein Handhabungsgestell (4) mit dieser verbunden ist, wobei das Handhabungsgestell (4) eines oder mehrere Gelenke aufweist, um die Mischeinrichtung räumlich und örtlich in- oder außerhalb des Mischbehälters verändern zu können.

2. Vorrichtung nach Anspruch 1, **dadurch gekennzeichnet, dass** der thermostatisierbare Mischbehälter (2) mittels eines Kühlmediums thermostatisiert wird.

3. Vorrichtung nach einem der Ansprüche 1 oder 2, **dadurch gekennzeichnet, dass** das Handhabungsgestell (4) kraftkompensiert ausgestaltet ist.

4. Vorrichtung nach einem der Ansprüche 1 bis 3, **dadurch gekennzeichnet, dass** das Handhabungsgestell (4) mit einer Einrichtung zum Abwiegen verbunden ist.

5. Vorrichtung nach einem der Ansprüche 1 bis 3, **dadurch gekennzeichnet, dass** das Handhabungsgestell (4) eine Einrichtung zum Abwiegen aufweist.

6. Vorrichtung nach einem der Ansprüche 1 bis 5, **dadurch gekennzeichnet, dass** die Beabstandung der Mischeinrichtung von der Wand des Mischbehälters durch ein axiales Verschieben der Mischeinrichtung einstellbar ist.

## Claims

1. Apparatus for discontinuous manufacturing of ice cream with a cooling device (1), a temperature-controllable mixing container (2) and a mixing device (3) arranged within this temperature-controllable mixing container, **characterized in that** the cooling device (1) is spatially separated from the mixing device (3) and is connected to it by means of a handling frame (4), whereby the handling frame (4) has one or more articulations in order to change the physical position and location of the mixing device within or outside of the mixing container.

2. Apparatus according to Claim 1, **characterized in that** the temperature-controllable mixing container (2) is temperature-controlled by means of a cooling medium.

3. Apparatus according to one of Claims 1 or 2, **characterized in that** the handling frame (4) has a force-compensated design.

4. Apparatus according to any of Claims 1 to 3, **characterized in that** the handling frame (4) is connected to a weighing device.

5. Apparatus according to any of Claims 1 to 3, **characterized in that** the handling frame (4) has a weighing device.

6. Apparatus according to any of Claims 1 to 5, **characterized in that** the distance between the mixing device and the wall of the mixing container is adjustable by means of axial displacement of the mixing device.

## Revendications

1. Dispositif de fabrication discontinue de glace alimentaire, avec une unité de refroidissement (1), un récipient de mélangeage thermostatisable (2) et une unité de mélangeage (3) disposée dans ce récipient de mélangeage thermostatisable, **caractérisé en ce que** l'unité de refroidissement (1) est spatialement séparée de l'unité de mélangeage (3) et est reliée à celle-ci par l'intermédiaire d'un bâti de manipulation (4), sachant que le bâti de manipulation (4) présente une ou plusieurs articulations afin de pouvoir modifier l'emplacement et la position de l'unité de mélangeage à l'intérieur ou à l'extérieur du récipient de mélangeage.

2. Dispositif selon la revendication 1, **caractérisé en ce que** le récipient de mélangeage thermostatisable (2) est thermostatisé au moyen d'un fluide de refroidissement.

3. Dispositif selon la revendication 1 ou 2, **caractérisé en ce que** le bâti de manipulation (4) est conçu à compensation de force.

4. Dispositif selon l'une des revendications 1 à 3, **caractérisé en ce que** le bâti de manipulation (4) est relié à une unité de pesage.

5. Dispositif selon l'une des revendications 1 à 3, **caractérisé en ce que** le bâti de manipulation (4) présente une unité de pesage.

6. Dispositif selon l'une des revendications 1 à 5, **caractérisé en ce que** la distance entre l'unité de mélangeage et la paroi du récipient de mélangeage peut être réglée par un déplacement axial de l'unité de mélangeage.
